# EUROPEAN PATENT APPLICATION

(11) **EP 2 595 294 A1**
(43) Date of publication of application: **22.05.2013**
(21) Application number: 11009111.3
(22) Date of filing: 17.11.2011
(51) Int. Cl.: H02M 3/335, H02J 7/02

(54) **Wireless charging system and apparatus, and control method thereof**

(71) Applicant: Lite-On It Corporation, Taipei, Taiwan (CN)
(72) Inventor: Scherer, Helmut, 35578 Wetzlar (DE); Horst, Dirk, 35578 Wetzlar (DE); Rumpf, Horst, 35578 Wetzlar (DE)
(74) Representative: Müller-Boré & Partner Patentanwälte

(57) **Abstract**

The invention provides a wireless charging system and a wireless charging apparatus for wirelessly charging a receiving device, and provides a method of controlling the wireless charging apparatus. The wireless charging apparatus comprises a power supply for providing a power voltage; a primary charging core; a switch module for changing the power voltage to an input voltage connected the power supply and the primary charging core so that the primary charging core has a primary current according to the power voltage supplied from the power supply; and a controller connected to the switch module and the primary charging core for measuring the primary current and for outputting a control signal for controlling the power voltage provided from the power supply.

## Description

### FIELD OF THE DISCLOSURE

The present invention relates to wireless charging technology, and particularly to a wireless charging system for wirelessly charging a receiving device, a wireless charging apparatus, and a control method thereof.

### BACKGROUND

Recently, portable devices, such as mobile phones and personal digital assistants (PDAs), are widely used in telecommunication and other related areas, and technology involving wireless charging of the portable devices has been implemented to commercial products on the market. Most of the current commercial products utilize the inductive coupling method with two coils, comprising one coil (primary coil) disposed at the power transmitter side and the other coil (secondary coil) disposed at the receiver side (the portable device to be charged). The primary coil and the secondary coil are not directly connected, and electric current flowing through the primary coil creates a magnetic field that acts on the secondary coil producing a current within it.

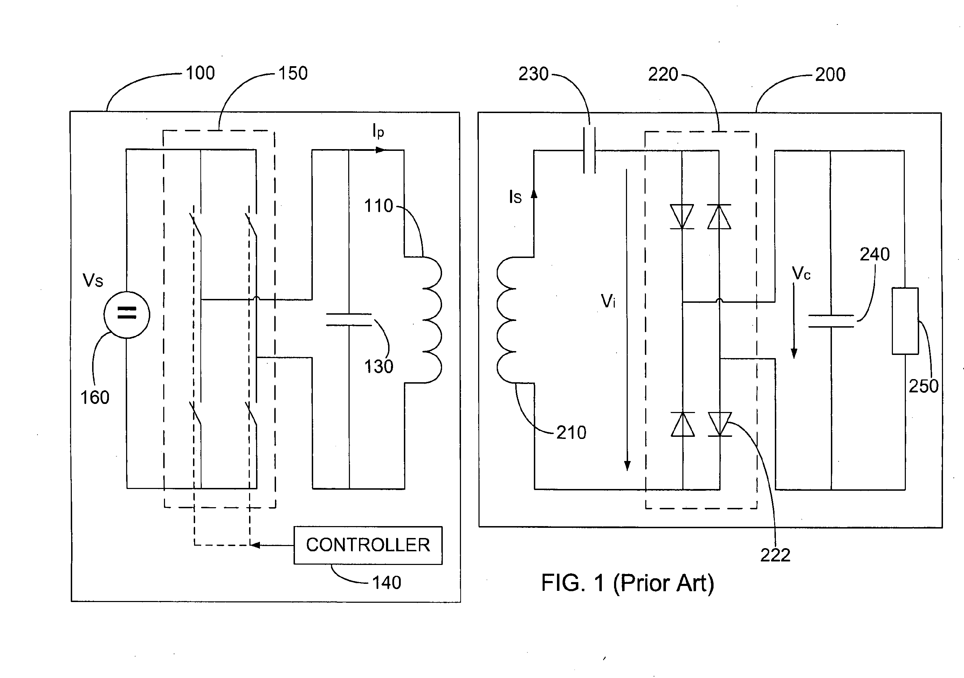

For example, Fig. 1 shows a typical wireless charging system. In Fig. 1, the wireless charging system has a power transmitter 100 and a power receiver 200. The power transmitter 100 comprises primary coil 110, a primary capacitor 130, a controller 140, a switch module 150 and a power supply 160. The power receiver 200 comprises secondary coil 210, a bridge rectifier 220, and a secondary capacitor 230. A charging capacitor 240 and a load 250 are connected to the bridge rectifier 220 for performing the charging of the power receiver 200. The primary capacitor 130 is in parallel to the primary coil 110, and the secondary capacitor 230 is in parallel to the secondary coil 210. Thus, the coil s 110 and 210 and the two capacitors 130 and 230 form the resonant circuits to transmit energy from the primary coil 110 to the secondary coil 210.

The power supply 160 supplies a power voltage Vₛ to the circuit of the primary capacitor 130 and the primary coil 110. The controller 140 controls the switches in the switch module 150 for controlling the connection between the power supply 160 to the circuit of the primary capacitor 130 and the primary coil 110. When the controller 140 controls the switch module 150 to supply a power voltage from the power supply 160 to the circuit of the primary capacitor 130 and the primary coil 110, a primary current I_{P} flows through the primary coil 110, and a secondary current I_{S} generated in the secondary coil 210. The switching frequency of the power transmitter 100 is aligned to the resonance frequency of the resonant circuit. Also, the bridge rectifier 220 is a full-wave diode bridge consisting of four diodes 222 for generating and rectifying a DC voltage to charge the accumulator.

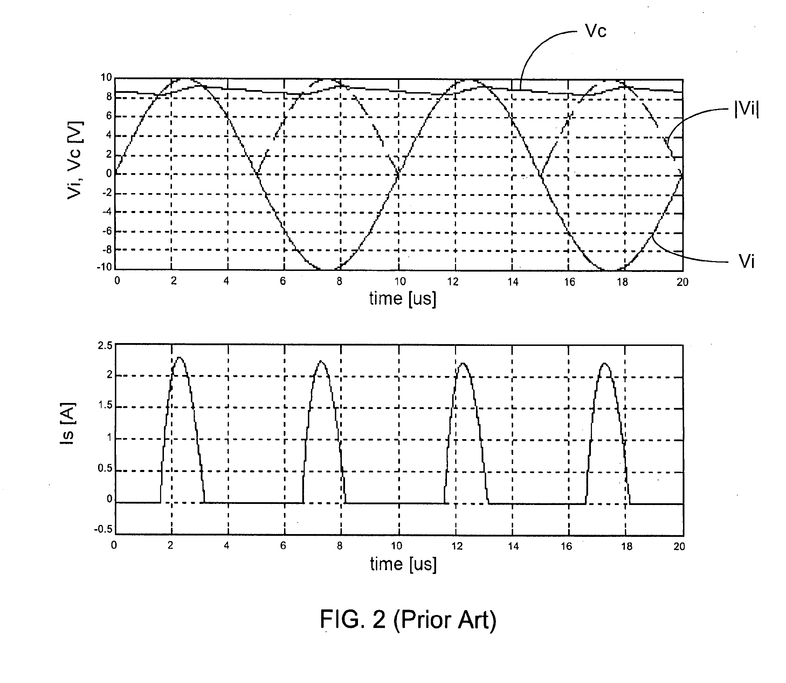

However, in the wireless charging system shown in Fig. 1, there is a fundamental problem in the power receiver 200 due to the electromagnetic interference (EMI) effect. The secondary current I_{S} generated in the secondary coil 210 is strongly nonlinear, as shown in Fig. 2. The secondary current I_{S} is generated only at the time when the absolute value of voltage Vᵢ (|Vᵢ|) at the secondary coil 210 is higher than the voltage V_{C} at the charging capacitor 240. This non-sinusoidal secondary current I_{S} produces harmonic frequencies in the magnetic field's spectrum. In addition, according to the inductive coupling, the primary current I_{P} through the primary coil 110 is also deformed, and the shape of the primary current I_{P} would show harmonic distortions.

### SUMMARY

To solve the aforementioned problems and drawbacks, the disclosure provides a wireless charging system, a wireless charging apparatus, and a control method thereof.

One aspect of the present invention provides a wireless charging apparatus, which comprises: a power supply to supply a power voltage; a switch module connected to the power supply to change the power voltage to an input voltage; a primary charging core connected to the switch module and having a primary current according to the input voltage supplied from the switch module; and a controller connected to the switch module and the primary charging core, the controller is configured to measure the primary current and to output a control signal for controlling the power voltage provided from the power supply.

In an alternative aspect of the present invention provides a wireless charging apparatus for wirelessly charging a receiving device, comprising: a power supply to supply a power voltage; a switch module connected to the power supply to change the power voltage to an input voltage; a primary charging core connected to the switch module and having a primary current according to the input voltage provided from the switch module; and a controller connected to the switch module, the primary charging core and the compensation coil, the controller is configured to measure the primary current and to output a control signal for controlling a compensation current of the compensation coil.

Another aspect of the present invention provides a method of controlling a wireless charging apparatus, comprising: receiving a input voltage, wherein the input voltage is used for inputting to a primary charging core; receiving a primary current of the primary charging core, wherein the primary current is configured to induce a receiving device by inductive coupling effect; measuring the harmonic distortions of the primary current; and outputting a control signal for changing the provided input voltage to the primary charging core in response to the measured result.

Another aspect of the present invention provides a method of controlling a wireless charging apparatus, comprising: receiving a input voltage, wherein the input voltage is used for inputting to a primary charging core; receiving a primary current of the primary charging core, wherein the primary current is configured to induce a receiving device by inductive coupling effect; measuring the harmonic distortions of the primary current; and outputting a control signal for generating a compensation current to the compensation coil according to the measured result.

To improve understanding of the different aspects of the disclosure, the techniques employed in the present invention to achieve the foregoing objectives, characteristics and effects thereof are described hereinafter by way of examples with reference to the accompanying drawings.

### BRIEF DESCRIPTION OF THE DRAWINGS

Fig. 1 is a schematic view of a prior art wireless charging circuit;
Fig. 2 shows charts of the voltage and current in the power receiver of Fig. 1;
Fig. 3 is a schematic view of an embodiment of the wireless charging system of the present invention;
Fig. 4 is a schematic view of an embodiment of the controller of the wireless charging apparatus in Fig. 3;
Fig. 5 is a schematic view of another embodiment of the wireless charging system of the present invention;
Fig. 6 is a schematic view of a further embodiment of the wireless charging system of the present invention; and
Fig. 7 is a flow chart of an embodiment of the method of controlling the charging apparatus of the present invention.

### DETAILED DESCRIPTION

To achieve the foregoing objectives, technical characteristics and advantages, the techniques employed in the present invention are described hereinafter in detail by way of embodiments with reference to the accompanying drawings.

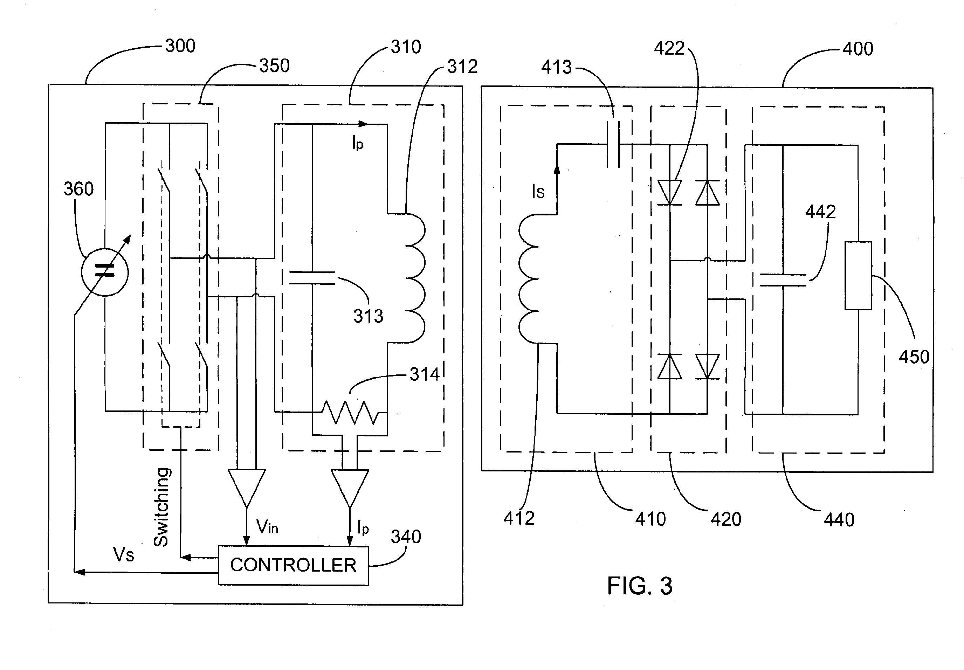

An embodiment of the present invention is shown in Fig. 3 as a wireless charging system, which comprises a charging apparatus 300 and a receiving device 400.

The charging apparatus 300 comprises a primary charging core 310, a controller 340, a switch module 350, and a power supply 360. The power supply 360 is configured to supply a power voltage Vₛ. The switch module 350 is connected to the power supply 360 to change the power voltage Vₛ to an input voltage Vᵢₙ for the primary charging core 310. The primary charging core 310 is connected to the switch module 350 to generate a primary current I_{P} according to the input voltage Vᵢₙ supplied from the switch module 350.

In Fig. 3, the primary charging core 310 comprises primary coil 312, a primary capacitor 313 and a resistor 314. The resistor 314 is connected in series to the primary coil 312, and the primary capacitor 313 is connected in parallel to the primary coil 312 and the resistor 314. The controller 340 is connected to the switch module 350 and the primary charging core 310.

The receiving device 400 comprises a secondary charging core 410, a bridge rectifier 420, and a charge circuit 440. The secondary charging core 410 is supposed to be placed opposite to the primary charging core 310 of the charging apparatus 300 in order to generate a secondary current I_{S} in response to the primary current I_{P} by inductive coupling effect. In Fig. 3, the secondary charging core 410 comprises a secondary coil 412 to generate the secondary current I_{S}, and a secondary capacitor 430. The secondary capacitor 430 is connected in series to the secondary coil 412. The bridge rectifier 420, which is a full-wave diode bridge consisting of four diodes 422, is connected to the secondary charging core 410 to rectify the secondary current I_{S} and to generate a DC voltage to the charge circuit 440. The charge circuit 440 is connected to the bridge rectifier 420 to receive the DC voltage for charging. In Fig.3, the charge circuit 440 comprises a charging capacitor 442 connected in parallel to a load 450.

In Fig. 3, the resistor 314 in the primary charging core 310 is used for detecting the primary current I_{P}, and then, to input to the controller 340. The controller 340 is connected to the primary charging core 310 to receive the primary current I_{P} detected by the resistor 314. Also, the controller 340 is connected to the switch module 350 to receive the input voltage Vᵢₙ inputted from the switch module 350 to the primary charging core 310. The controller 340 obtains the primary current I_{P} detected from the resistor 314 and determines whether there is any harmonic distortion shown in the shape of the primary current I_{P}. If harmonic distortions are detected in the shape of the primary current I_{P}, the controller 340 then controls the power supply 360 in order to change the power voltage Vₛ supplied from the power supply 360 to the switch module 350 to reduce the harmonic distortions.

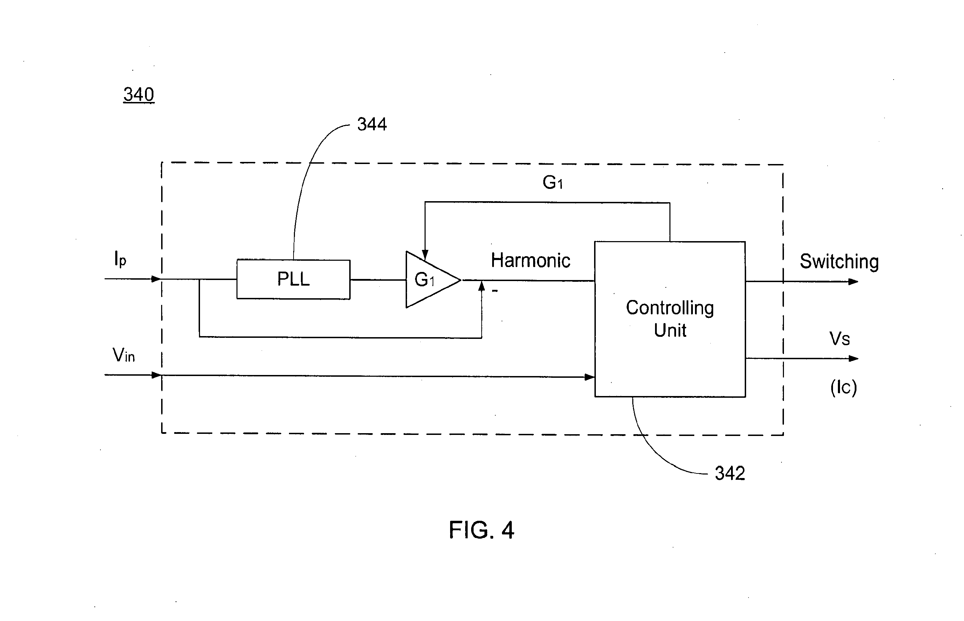

The controller 340 can be realized and implemented in various forms of controlling device. For example, Fig. 4 shows an embodiment of the controller 340 that can be used in the wireless charging apparatus 300 in Fig. 3. The controller 340 comprises a controlling unit 342 and a phase-locked loop (PLL) feedback controller 344. The controller 340 receives the primary current I_{P} detected from the resistor 314 and the input voltage Vᵢₙ, and outputs control signals. The control signals is the signals to control the power supply 360 to change the power voltage Vₛ supplied from the power supply 360 in this embodiment. But the control signals can be other signals, ex, compensation current I_{c}, in other embodiment that will be described later.

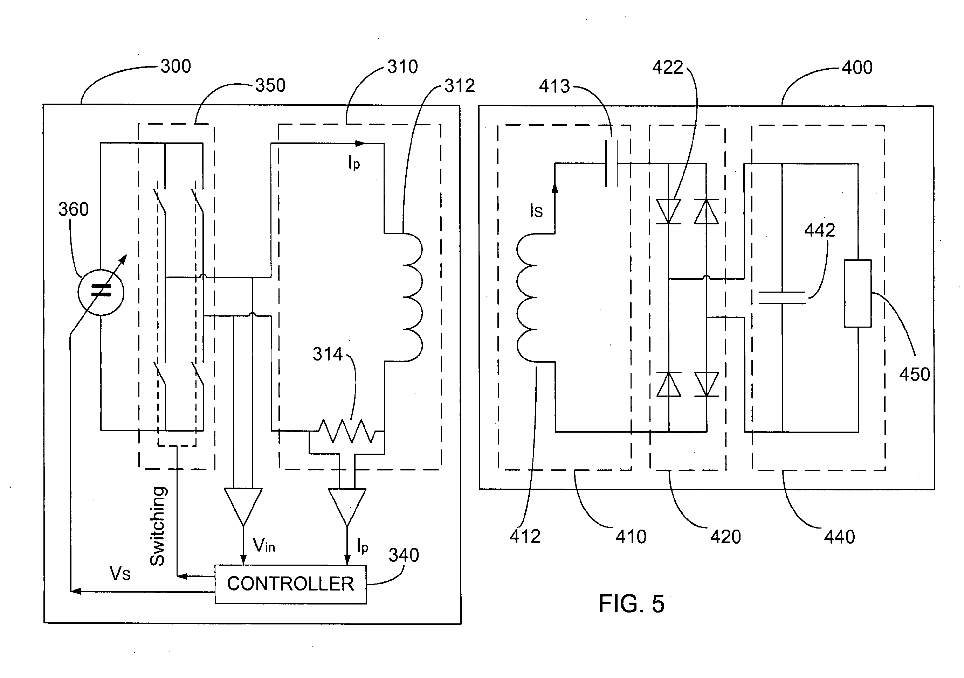

It should be noted that the embodiment shown in Fig. 3 and explained above does not limit the implementation of the circuitry structures of the charging apparatus 300 and the receiving device 400. For example, Fig. 5 shows another embodiment of the wireless charging system.

Elements having the same number in the embodiment shown in Fig. 5 are essentially the same with those in Fig. 3, and the difference is that the charging apparatus 300 in Fig. 5 omits the primary capacitor 313, which exists in the embodiment in Fig. 3. The primary capacitor 313 can be omitted due to the primary current I_{P} is controlled by the controller 340 directly.

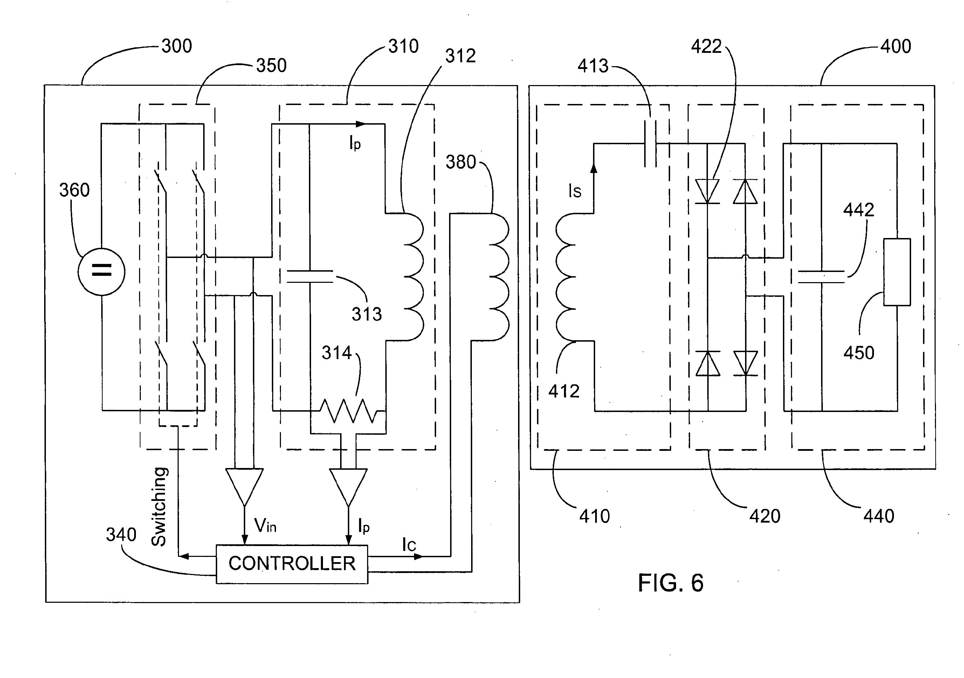

Fig. 6 shows a further embodiment of the wireless charging system with an additional compensation coil. Elements having the same number in the embodiment shown in Fig. 6 are essentially the same with those in Fig. 3, and the difference is that the charging apparatus 300 in Fig. 6 further comprises a compensation coil 380. The compensation coil 380 is disposed on a side of the primary charging core 310 opposite to the secondary charging core 410, and is connected to the controller 340 to generate a compensation current I_{c}. In this way, the controller 340 is configured to control the compensation coil 380 to generate the compensation current I_{c} according to primary current I_{P} detected from the resistor 314. The compensation current I_{c} may be determined to compensate the harmonic distortions happened in the shape of the primary current I_{P}.

It should be noted that, in the embodiment shown in Fig. 6, the controller 340 may utilize the circuitry structure shown in Fig. 4. In this way, the outputted control signal from the controller 340 includes the compensation current I_{c}.

In the present application, the structures of coils 312, 412 and 380 are not limited at a single coil structure, and they can be implemented in various circuit or coil structure, for example, at a multi coil array structure.

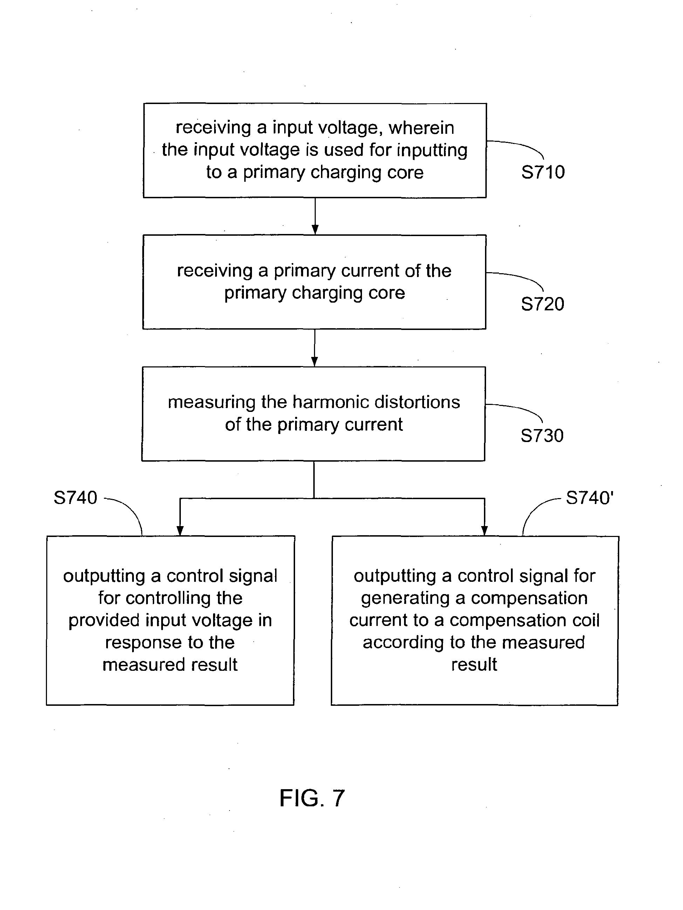

Fig. 7 is a flow chart of an embodiment of the method of controlling the charging apparatus of the present invention. The method includes the following steps: receiving a input voltage Vᵢₙ, wherein the input voltage is outputted from a switch module 350 and is used for inputting to a primary charging core 310 (Step S710); receiving a primary current I_{P} of the primary charging core 310, wherein the primary current I_{P} is configured to induce a receiving device to generate a secondary current by inductive coupling effect (Step S720); measuring the harmonic distortions of the primary current (Step S730); and outputting a control signal for changing the provided input voltage Vᵢₙ to the primary charging core 310 in response to the measured result (Step S740).

In case of that the wireless charging apparatus comprises the compensation coil as shown in Fig. 6, the present method further comprises the step of generating a compensation current I_{c} to a compensation coil according to the measured result, wherein the compensation current I_{c} is configured to compensate the inducing of the secondary current (Step S740'). The method may be utilized in any embodiment of the wireless charging apparatus as aforementioned, or any other realization and implementation of the wireless charging apparatus of the present invention.

The preferred embodiments of the present disclosure have been disclosed in the examples to show the applicable value in the related industry. However, the examples should not be construed as a limitation on the actual applicable scope of the invention, and as such, all modifications and alterations without departing from the spirits of the invention and appended claims shall remain within the protected scope and claims of the invention.

## Claims

1. A wireless charging system, comprising:
a charging apparatus, comprising:
a power supply to supply a power voltage;
a switch module connected to the power supply to change the power voltage to an input voltage;
a primary charging core connected to the switch module and having a primary current according to the input voltage provided from the switch module; and
a controller connected to the switch module and the primary charging core, the controller is configured to measure the primary current and to output a control signal for controlling the power voltage provided from the power supply; and
a receiving device to be placed opposite to the charging apparatus to perform wireless charging, the receiving device comprising:
a secondary charging core to be placed opposite to the primary charging core to generate a secondary current in response to the primary current by inductive coupling effect;
a bridge rectifier connected to the secondary charging core to rectify the secondary current and to generate a DC voltage; and
a charge circuit connected to the bridge rectifier to receive the DC voltage for charging.

2. A wireless charging system, comprising:
a charging apparatus, comprising:
a power supply to supply a power voltage;
a switch module connected to the power supply to change the power voltage to an input voltage;
a primary charging core connected to the switch module and having a primary current according to the input voltage provided from the switch module;
a compensation coil disposed on a side of the primary charging core;
and
a controller connected to the switch module, the primary charging core and the compensation coil, the controller is configured to measure the primary current and to output a control signal for controlling a compensation current of the compensation coil; and
a receiving device to be placed opposite to the charging apparatus to perform wireless charging, the secondary receiving device comprising:
a secondary charging core to be placed opposite to the primary charging core to generate a secondary current in response to the primary current by inductive coupling effect;
a bridge rectifier connected to the secondary charging core to rectify the secondary current and to generate a DC voltage; and
a charge circuit connected to the bridge rectifier to receive the DC voltage for charging.

3. The wireless charging system as claimed in claim 1 or 2, wherein the primary charging core comprises a primary coil and a resistor connected in series to the primary coil.

4. The wireless charging system as claimed in claim 3, wherein the controller is configured to measure the primary current from the resistor.

5. The wireless charging system as claimed in claim 1 or 2, wherein the primary charging core further comprises a primary capacitor connected in parallel to the primary coil.

6. A wireless charging apparatus for wirelessly charging a receiving device, comprising:
a power supply to supply a power voltage;
a switch module connected to the power supply to change the power voltage to an input voltage;
a primary charging core connected to the switch module and having a primary current according to the input voltage provided from the switch module; and
a controller connected to the switch module and the primary charging core, the controller is configured to measure the primary current and to output a control signal for controlling the power voltage provided from the power supply.

7. The wireless charging apparatus as claimed in claim 6, wherein the primary charging core comprises a primary coil and a resistor connected in series to the primary coil.

8. The wireless charging apparatus as claimed in claim 7, wherein the controller is configured to measure the primary current from the resistor.

9. The wireless charging apparatus as claimed in claim 7, wherein the primary charging core further comprises a primary capacitor connected in parallel to the primary coil.

10. A wireless charging apparatus for wirelessly charging a receiving device, comprising:
a power supply to supply a power voltage;
a switch module connected to the power supply to change the power voltage to an input voltage;
a primary charging core connected to the switch module and having a primary current according to the input voltage provided from the switch module;
a compensation coil disposed on a side of the primary charging core; and
a controller connected to the switch module, the primary charging core and the compensation coil, the controller is configured to measure the primary current and to output a control signal for controlling a compensation current of the compensation coil.

11. The wireless charging apparatus as claimed in claim 10, wherein the primary charging core comprises a primary coil and a resistor connected in series to the primary coil.

12. The wireless charging system as claimed in claim 11, wherein the controller is configured to measure the primary current from the resistor.

13. The wireless charging system as claimed in claim 11, wherein the primary charging core further comprises a primary capacitor connected in parallel to the primary coil.

14. A method of controlling a wireless charging apparatus, comprising:
receiving a input voltage, wherein the input voltage is used for inputting to a primary charging core;
receiving a primary current of the primary charging core, wherein the primary current is configured to induce a receiving device by inductive coupling effect;
measuring the harmonic distortions of the primary current; and
outputting a control signal for controlling the provided input voltage to the primary charging core in response to the measured result.

15. A method of controlling a wireless charging apparatus, comprising:
receiving a input voltage, wherein the input voltage is used for inputting to a primary charging core;
receiving a primary current of the primary charging core, wherein the primary current is configured to induce a receiving device by inductive coupling effect;
measuring the harmonic distortions of the primary current; and
outputting a control signal for controlling a compensation current of the compensation coil in response to the measured result.
